Europäisches Patentamt

European Patent Office

Office européen des brevets

(11) Veröffentlichungsnummer: **0 358 931**
**A2**

(12) # EUROPÄISCHE PATENTANMELDUNG

(21) Anmeldenummer: **89114500.5**

(51) Int. Cl.5: **B60S 3/04**

(22) Anmeldetag: **05.08.89**

(30) Priorität: **13.09.88 DE 3831155**

(43) Veröffentlichungstag der Anmeldung:
**21.03.90 Patentblatt 90/12**

(84) Benannte Vertragsstaaten:
**DE ES FR GB IT**

(71) Anmelder: **Kleindienst GmbH**
**Argonstrasse 8**
**D-8900 Augsburg(DE)**

(72) Erfinder: **Fritsche, Walter**
**Schnitterstrasse 29**
**D-8901 Königsbrunn(DE)**

(74) Vertreter: **Ernicke, Hans-Dieter, Dipl.-Ing. et al**
**Patentanwälte Dipl.-Ing. H.-D. Ernicke**
**Dipl.-Ing. Klaus Ernicke Schwibbogenplatz**
**2b**
**D-8900 Augsburg(DE)**

(54) **Verfahren und Vorrichtung zum Waschen von Fahrzeugen.**

(57) Die Erfindung betrifft ein Verfahren und eine Vorrichtung zum Waschen von Fahrzeugen in einer Autowaschanlage mit mehreren Behandlungsaggregaten. Hierbei wird während der Behandlung der von den Behandlungsaggregaten, einer Bürste, Düse o. dgl., zurückgelegte Weg gemessen. Über eine mitbewegte Tastvorrichtung, insbesondere eine momentengesteuerte Waschbürste, wird die Fahrzeugkontur ermittelt, wobei der zurückgelegte Weg nach mindestens einer Richtung gemessen wird. In der Steuerung der Autowaschanlage werden die Konturdaten den ereignisbezogenen Wegkoordinaten zugeordnet, gespeichert und für die Steuerung nachfolgender Abschnitte des Waschprozesses bereitgehalten. Hierbei werden die Bewegungen der Behandlungsaggregate wiederum über die Wegmessung überwacht. Für die Wegmessung sind an den Behandlungsaggregaten (4) bzw. einem beweglichen Portal (2) Weggeber (3) mit Sensoren (8) und Loch- oder Zahnleisten (7,6) angeordnet.

Fig. 8

## Verfahren und Vorrichtung zum Waschen von Fahrzeugen

In Autowaschanlagen ist es für ein optimales Waschergebnis erforderlich, die verschiedenen Behandlungsaggregate, wie Waschbürsten, Schlauchvorhang, Trocknungsdüsen, usw. mit konstantem Abstand über die Fahrzeugkontur zu bewegen. Der Abstand sollte hierbei auch auf die jeweils optimale Größe eingestellt werden können.

In der Praxis wird dieses Problem durch Tasteinrichtungen gelöst, mit denen in jedem Abschnitt des Waschprozesses die Fahrzeugkontur von neuem erfaßt und das jeweilige Behandlungsaggregat entsprechend gesteuert wird. Dies ist zum einen aufwendig und verlangsamt insgesamt den Waschprozeß, da aus Sicherheitsgründen bei den Tastvorgängen mit einer niedrigeren Geschwindigkeit gefahren werden muß, als sie vom Behandlungsaggregat her an sich möglich wäre. Besonders ungünstig wirkt sich dies für stationäre Portalwaschanlagen aus, in denen das Fahrzeug steht, und das Portal hin- und herfährt.

Es ist es für instationäre Waschanlagen, sog. Waschstraßen, auch bekannt, am Eingang über eine stationäre Lichtschranke die Fahrzeugkontur abzutasten und danach die Bewegungen der Behandlungsaggregate zu steuern. Dies hat in der Praxis zum einen Schwierigkeiten mit der Durchleuchtung an den Fensterpartien und zum anderen Probleme mit der Kollisionsgefahr gegeben.

Es ist daher Aufgabe der Erfindung, eine Möglichkeit zur besseren Steuerung einer Autowaschanlage aufzuzeigen, die höhere Durchlaufgeschwindigkeiten und ein besseres Waschergebnis ermöglicht.

Die Erfindung löst diese Aufgabe mit den Merkmalen im Verfahrens- und Vorrichtungshauptanspruch.

Mit der Erfindung kann über die Wegmessung die jeweilige Stellung des Behandlungsaggregates kontrolliert werden. Dies ist auch für Autowaschanlagen ohne Konturenerkennung und -steuerung von Vorteil, beispielsweise für einen Neustart nach einer Notabschaltung. Des weiteren können auch Sprüh- und Auftragevorrichtungen für Wasch- und Spülsubstanzen exakter zu- und abgeschaltet werden.

In Verbindung mit einer Konturenerfassung und -steuerung ergibt sich der besondere Vorteil, daß die Aggregatbewegungen auf Gleichlauf mit der Steuerungsvorgabe überwacht werden können. Die Steuerung kann hierdurch sicherer und schneller werden.

Zur sicheren Ermittlung der Konturen wird vorzugsweise eine bewegliche Tastvorrichtung eingesetzt, deren zurückgelegter Weg nach ein, zwei oder drei Richtungen gemessen wird. Diese Maße können direkt mit den entsprechenden Wegmaßen an den Behandlungsaggregaten verglichen werden. Die der Kontur entsprechenden Auslenkungen der Tastvorrichtung werden den mitgeführten Ortskoordinaten in der Steuerung zugeordnet und gespeichert. Die bewegliche Tastvorrichtung eignet sich gleichermaßen gut zum Einsatz in stationären Waschanlagen und instationären Waschstraßen. Bei letzteren kann alternativ die Konturenerfassung auch durch eine ortsfeste Tastvorrichtung, beispielsweise eine optische Abtastung erfolgen.

Die erfindungsgemäße Lehre hat den Vorteil, daß in den verschiedenen Abschnitten des Waschprozesses mit optimaler Geschwindigkeit gefahren werden kann. Die für Konturenänderungen, wie z.B. Dachkanten oder vorstehende Hindernisse, erforderlichen Bremsphasen können trotz der höheren Fahrgeschwindigkeit rechtzeitig eingeleitet werden.

Es ergibt sich auch die Möglichkeit, entlang der ebenen Konturenabschnitte Beschleunigungsphasen einzubauen. Besonders wichtig ist dies beispielsweise bei der Unterscheidung zwischen Fahrzeugen mit Motorhaube und Frontlenkern. An solchen langen abfallenden Karosserieflächen kann zur Vermeidung von Portalstops das Behandlungsaggregat mit einer von Haus aus höheren Geschwindigkeit auf- oder abbewegt werden.

Außerdem ermöglicht die Erfindung für die unterschiedlichen Behandlungsaggregate eine optimale Einstellung des Arbeitsabstandes und dessen Beibehaltung in Verfolgung der Fahrzeugkontur. In der Steuerung werden hierzu Korrekturwerte für die Variierung der jeweils erforderlichen Abstände vorgegeben. Diese Möglichkeiten äußern sich in einer deutlichen Verbesserung der Wasch- und Trocknungsqualität. Vorteilhaft ist auch die verringerte Kollisionsgefahr zwischen den positionsüberwachten Behandlungsaggregaten und dem Fahrzeug.

Die Tastvorrichtung kann vor allem bei instationären Waschstraßen als separate, das Fahrzeug überfahrende, Tastrolle ausgebildet sein. Besonders vorteilhaft ist es für beide Formen von Waschanlagen, hierfür ein ohnehin vorhandenes Behandlungsaggregat, beispielsweise eine oder mehrere momentengesteuerte Waschbürsten einzusetzen. Die Kontur ist hier über den Momentenverlauf ablesbar. Der durch den Wegfall der verschiedenen Tastelemente, Endschalter usw. ohnehin wesentlich verringerte Bauaufwand der Waschanlage wird hierdurch noch kleiner, außerdem wird Zeit gespart. Die Waschbürste ist außerdem üblicherweise an erster Stelle in einer Waschanlage angeordnet, so daß die Konturenerfassung an der ersten Station in einer Waschstraße bzw. im ersten Behandlungslauf in einer stationären Waschanlage erfolgt.

Je nach Ausrüstung der Autowaschanlage und dem Qualitätsbedürfnis wird die Kontur nach ein, zwei oder drei Richtungen abgetastet und entsprechend auch die Stellung der Behandlungsaggregate über die Wegmessung kontrolliert. Im Extremfall genügt die Längenmessung, um festzustellen, in welchen Abständen signifikante Konturenänderungen auftreten.

Die Höhen- und Längenabtastung erfolgt vorzugsweise durch eine horizontale Waschbürste, während die Seitenauslenkung über ein Paar vertikaler Waschbürsten ermittelt wird. Wenn eine Doppelanordnung von zwei horizontalen Waschbürsten oder zwei Paaren vertikaler Waschbürsten hintereinander vorgesehen ist, können die ermittelten Konturenwerte bereits zur Steuerung der zweiten Bürsten verwendet werden.

In Waschstraßen, die mit ortsfesten Portalen zur Führung der einzelnen Behandlungsaggregate ausgerüstet sind, findet die Konturenmessung vor allem über die Höhe und die Seitenauslenkung statt. Die Länge wird rechnerisch über die konstante Schleppgeschwindigkeit ermittelt, wobei die Position des Fahrzeugs über einen Taster am Anlageneingang festgehalten und in der Steuerung mitgeführt wird. Weggeber sind demgemäß nur für die Höhen- und Seitenauslenkungen der Waschbürsten und der anderen Behandlungsaggregate vorgesehen.

Es gibt aber auch Waschstraßen mit bewegten Bürstenportalen. Hier ergeben sich zwei Möglichkeiten. Einmal kann diese Bürstenstation zur Konturenmessung für die nachgeordneten Behandlungsaggregate herangezogen werden, wobei die Längenmessung über einen Weggeber am bewegten Portal erfolgt.

Zum anderen kann die Kontur aber auch vorher über eine andere Tastvorrichtung, beispielsweise eine stationäre optische Lichtschrankenanordnung abgetastet und zur optimalen Steuerung der Bewegungen der Waschbürsten und des Bürstenportales herangezogen werden.

Bei stationären Autowaschanlagen wird vorzugsweise die Kontur im ersten Waschdurchgang ermittelt. Je nach Zahl und Art der Überläufe steht sie zur Steuerung des Waschrücklaufes und/oder des Trocknungslaufes zur Verfügung.

Der Weggeber besteht vorzugsweise aus einem inkrementalen Maßstab, der relativ ortsfest am Boden oder in einem Portal angeordnet ist sowie zwei Sensoren, die am relativ bewegten Teil, d.h. dem Behandlungsaggregat oder dem Portal, befestigt sind. Es empfiehlt sich, zwei Sensoren in Bewegungsrichtung hintereinander anzuordnen, um über die Reihenfolge der eingehenden Signale Vorwärts- und Rückwärtsfahrt unterscheiden zu können.

Der Maßstab und der Sensor können auf unterschiedliche Weise ausgebildet sein. Unter den gegebenen Umweltbedingungen in einer Autowaschanlage empfiehlt sich die Verwendung eines berührungslosen Sensors, vorzugsweise eines induktiven oder kapazitiven Tasters. Der Maßstab ist entsprechend als metallische Zahn- oder Lochleiste gestaltet. In eine Zahnleiste ist zur Sicherung gegen Unfallgefahr eine Gegenleiste aus Kunststoff eingesetzt.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:

Fig. 1 bis 4: in verschiedenen Ansichten und in ausschnittsweiser Darstellung einen Weggeber an einem beweglichen Portal,

Fig. 5 bis 7: in verschiedenen Ansichten eine Waschbürste mit Weggeber und

Fig. 8: in perspektivischer Ansicht eine Station in einer Waschstraße mit zwei aneinander geführten Portalen mit Weggebern.

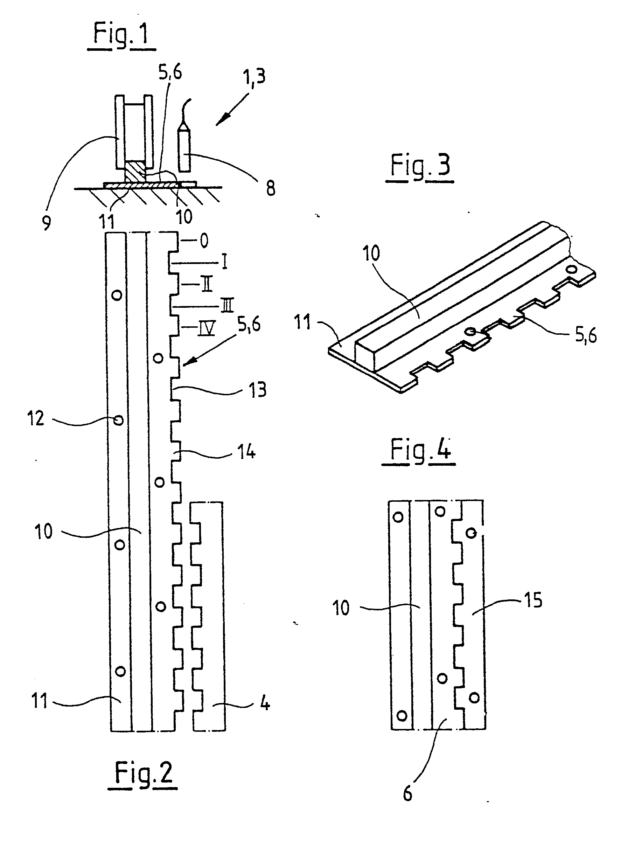

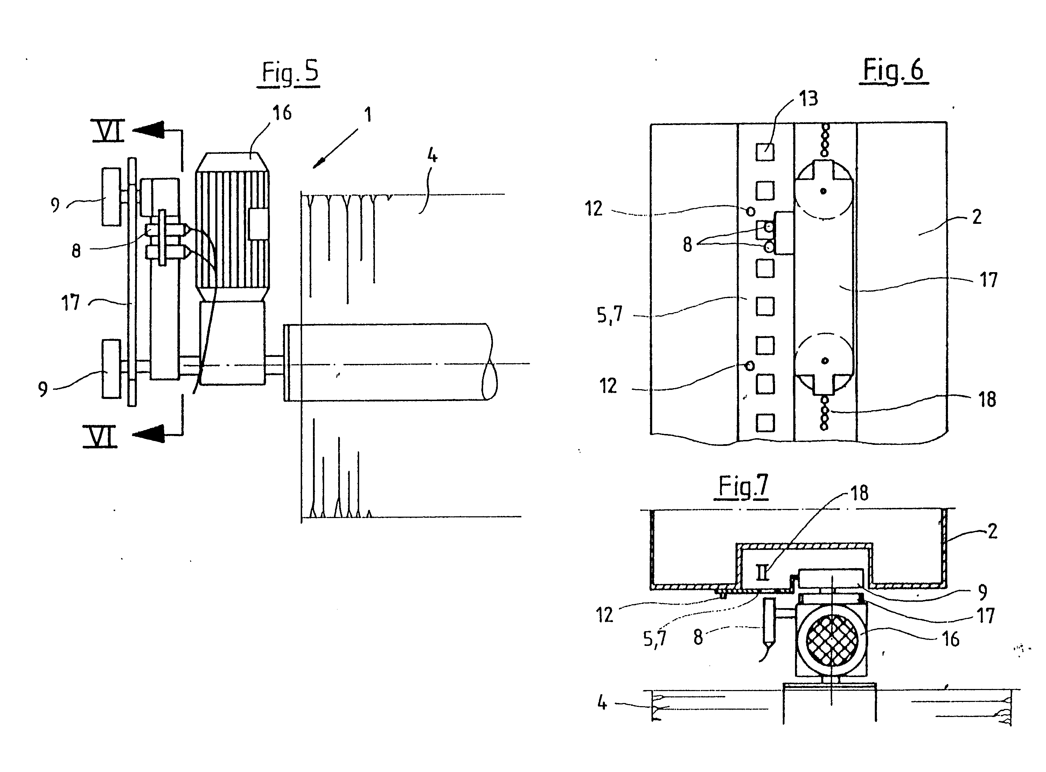

Die Zeichnungen zeigen einen Ausschnitt einer Autowaschanlage (1) mit mehreren Behandlungsaggregaten. Die Autowaschanlage (1) kann beliebig stationärer oder instationärer Art sein. In den Zeichnungen ist ein Portal (2) angedeutet, das im Ausführungsbeispiel der Fig. 1 bis 4 beweglich gelagert und angetrieben ist, im Ausführungsbeispiel der Fig. 5 bis 7 aber auch ortsfest angeordnet sein kann. Im letztgenannten Fall handelt es sich um eine instationäre Autowaschanlage (1), durch die die Fahrzeuge geschleppt werden.

Die Autowaschanlage (1) hat eine zentrale Steuerung, vorzugsweise mit einem Mikroprozessor, die einen Datenspeicher beinhaltet, der beschrieben und gelöscht werden kann. In der Steuerung wird die ortsbezogene Kontur des zu waschenden Fahrzeugs gespeichert und zur Steuerung der Bewegung der Behandlungsaggregate, wie Waschbürsten (4), Schlauchvorhängen, Sprühdüsen, Trockendüsen und dgl. eingesetzt. Die Behandlungsaggregate verfügen hierbei über Weggeber (3), mit denen ihre Relativbewegung abgetastet und an die zentrale Steuerung gemeldet wird. Soweit die Portale (2), in denen die Behandlungsaggregate geführt sind, selbst beweglich sind, verfügen auch sie über einen Weggeber (3). Entsprechend werden die Positionen der Behandlungsaggegate nach ein, zwei oder auch drei Richtungen überwacht.

Die Konturenerfassung erfolgt über eine Tastvorrichtung (4), die relativ zum Fahrzeug bewegt wird oder unter der das Fahrzeug durchgeschleppt wird.

Im gezeigten Ausführungsbeispiel der Fig. 5 bis 7 ist die Tastvorrichtung als horizontale Waschbürste mit Drehmomentensteuerung ausgebildet.



Änderungen der Fahrzeugkontur werden durch Anstieg oder Abfall des Bürstendrehmomentes erkannt und an die Steuerung gemeldet, die die Bürsten- und Portalbewegungen steuert.

Die Waschbürste (4) besitzt einen Weggeber (3), der den zurückgelegten Weg bei der Relativbewegung gegenüber dem Portal (2) mißt. In der gezeigten Ausführung ist auch das Portal (2) beweglich, dessen Weg über den Weggeber (3) gemessen und ebenfalls an die zentrale Steuerung gemeldet wird. Während die in der Abtastfunktion momentengesteuerte Waschbürste über das Fahrzeug klettert, wird zugleich ihre Position laufend nach Länge und Höhe ermittelt.

In der Steuerung werden die von der Waschbürste (4) ermittelten Höhenkoordinaten und die vom Portal (2) stammenden Längskoordinaten mit den Drehmomentensignalen verknüpft. Auf diese Weise ergeben sich ereignisbezogene Koordinaten, die im Datenspeicher für die Dauer des Behandlungsvorganges abgelegt werden. Hierbei können alle Daten laufend gespeichert werden. Alternativ kann auch nur auf die Daten von besonders relevanten Konturpunkten, wie Dachkanten, Vorsprüngen (Taxischilder), Fensterkanten, usw. zugegriffen werden.

Für die nachfolgenden Behandlungsvorgänge, wie einen zweiten Waschdurchgang, die drucklose Auftragung von Spülwasser, Wachsauftrag, Trocknung, und dgl. werden die ereignisbezogenen Ortskoordinaten wieder in die Steuerung eingelesen, die die Bewegung der betreffenden Behandlungsaggregate in Abhängigkeit von dieser Vorgabe und der Positionsrückmeldung aus den Weggebern steuern. In einer stationären Waschanlage fährt die Waschbürste (4) im Rücklauf dann ohne Momentensteuerung. Es kann außerdem ein Taster vorgesehen sein, der zur Bildung eines absoluten Bezugspunktes die Position der Fahrzeugvorderkante meldet.

Der Weggeber (3) besteht in den gezeigten Ausführungsbeispielen aus einem Maßstab (5), der vorzugsweise relativ ortsfest am Boden oder im Portal (2) angeordnet und als Inkrement-Maßstab ausgebildet ist. Er wird abgetastet durch zwei in Bewegungsrichtung hintereinander mit kurzem Abstand angeordnete Sensoren (8). Der Weggeber (3) umfaßt weiter einen Zähler, der die von den Sensoren (8) gemeldeten Signale aufaddiert.

In Fig. 1 besteht der Maßstab (5) aus einer metallischen Zahnleiste (6) mit regelmäßig verteilten Ausnehmungen (13) und Zähnen (14). Die Sensoren (8) sind als berührungslose induktive Taster ausgebildet, die der Zahnteilung entsprechend voneinander beabstandet sind. Die Sensoren (8) sind in geeigneter Weise über der Zahnleiste am Laufwerk (9) des Portals (2) befestigt. Sie unterscheiden die metallischen Zähne von den Ausnehmungen und können durch ihren Abstand auch die Zahnränder feststellen.

Die Zahnleiste (6) stellt einen Bestandteil der Fußplatte (11) für die Laufschiene (10) dar und ist mittels Schrauben (12) befestigt. In die Zahnleiste (6) ist gemäß Fig. 2 und 4 eine Gegenleiste (15) mit einer komplementären Verzahnung eingesetzt. Die Gegenleiste (15) besteht aus Kunststoff und deckt die Zahnleiste (6) nach vorn ab.

Im Ausführungsbeispiel der Fig. 5 bis 7 ist im Portal (2) neben der vertikalen Führung für den Laufwagen (17) der Waschbürste (4) eine metallische Lochleiste (7) angeordnet. Fig. 6 gibt diese Anordnung als Schnitt VI-VI von Fig. 5 wieder. Fig. 7 stellt hierzu eine Draufsicht dar.

Der Laufwagen (17) trägt den Bürstenmotor (16) und wird über eine umlaufende Kette (18) auf- und abbewegt. Am Laufwagen (17) sind seitlich die beiden Sensoren (8) angeordnet und überstreichen bei der Laufwagenbewegung die Lochreihe in der Leiste (7). Die Sensoren (8) sind wie im ersten Ausführungsbeispiel angeordnet und haben auch die gleiche Ausbildung und Funktion.

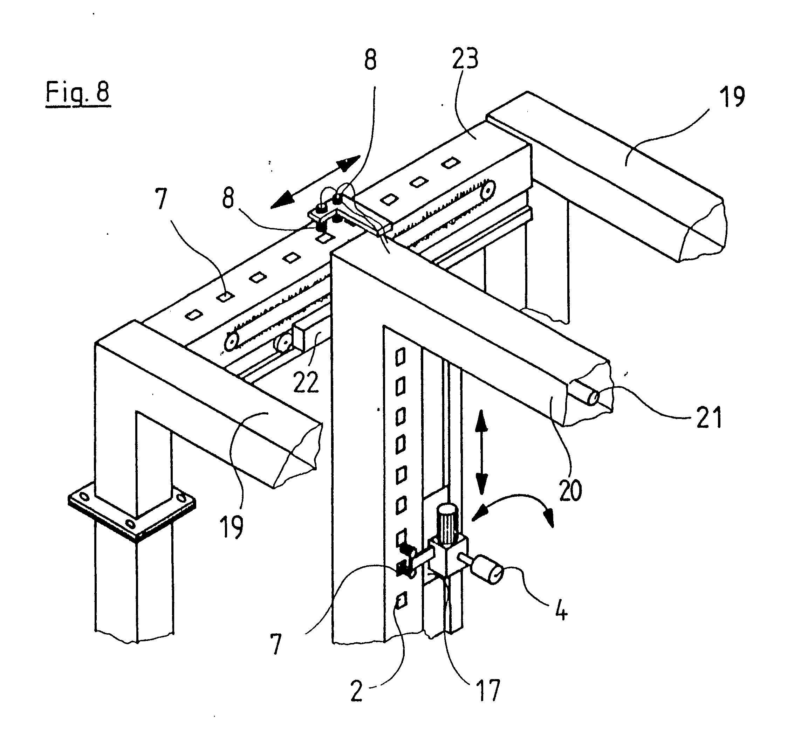

Fig. 8 zeigt eine Waschstation in einer Waschstraße mit zwei aneinander geführten Portalen (2,19). Das innere Portal (2) und die Waschbürstenanordnung entsprechen dem Ausführungsbeispiel von Fig. 5 - 7. Mit der horizontalen Waschbürste wird die Höhenkontur des Fahrzeugs abgetastet. Im Querträger (20) des Portals (2) ist außerdem noch ein Antriebszug (20) für ein Paar vertikaler Waschbürsten (nicht dargestellt) untergebracht. Diese tasten die Seitenkontur des Fahrzeugs ab und besitzen analog der horizontalen Bürste (4) jede einen Weggeber (3).

Das Portal (2) ist am Längsträger (23) des ortsfesten Portals (19) längs der Schlepprichtung der Fahrzeuge über ein Fahrwerk (22) und einen Antrieb beweglich gelagert. Zum Waschen der steileren Vorder- und Rückfront sowie der Front- und Heckfenster eines Fahrzeugs wird das Portal (19) mit den Fahrzeugen mitbewegt. Diese Mitführstrecke wird bei der Konturenerfassung ebenfalls gemessen, in der Steuerung aber in Abrechnung gebracht und damit kompensiert.

Das Portal (2) verfügt über einen Weggeber (3) der in Fig. 5 - 7 dargestellten Art. Für das Portal (2) ist die Lochleiste (7) auf dem Längsträger (23) des Portals (19) angeordnet und wirkt mit zwei Sensoren (8) an der Oberseite des Portals (2) zusammen.

## STÜCKLISTE

1 Autowaschanlage
2 Portal
3 Weggeber
4 Tastvorrichtung, Waschbürste

5 Maßstab
6 Zahnleiste
7 Lochleiste
8 Sensor
9 Laufwerk
10 Laufschiene
11 Fußplatte
12 Verschraubung
13 Ausnehmung
14 Zahn
15 Gegenleiste
16 Motor
17 Laufwagen
18 Kette
19 Portal
20 Querträger
21 Antriebszug
22 Fahrwerk und Antrieb
23 Längsträger

**Ansprüche**

1. ) Verfahren zum Waschen von Fahrzeugen in einer Autowaschanlage mit mehreren Behandlungsaggregaten, dadurch **gekennzeichnet**, daß während der Behandlung der von den Behandlungsaggregaten zurückgelegte Weg gemessen wird.

2. ) Verfahren nach Anspruch 1, dadurch **gekennzeichnet**, daß die Fahrzeugkontur mit einer bewegten Tastvorrichtung ermittelt wird, wobei der von der Tastvorrichtung zurückgelegte Weg nach mindestens einer Richtung gemessen wird, und daß in der Steuerung der Autowaschanlage die Konturdaten den ereignisbezogenen Koordinaten zugeordnet, gespeichert und für die Steuerung nachfolgender Abschnitte des Waschprozesses abgerufen werden, wobei die Bewegungen der Behandlungsaggregate über die Wegmessung überwacht werden.

3. ) Verfahren nach Anspruch 2, dadurch **gekennzeichnet**, daß die Fahrzeugkontur durch ein Behandlungsaggregat, insbesondere eine momentengesteuerte Waschbürsten abgetastet wird.

4. ) Verfahren nach Anspruch 1, 2 oder 3, dadurch **gekennzeichnet**, daß bei der Tastvorrichtung und den anderen Behandlungsaggregaten über Weggeber deren relativer Weg in der Höhe und/oder der Breite gegenüber ihrer Führung gemessen wird.

5. ) Verfahren nach Anspruch 1 oder einem der folgenden, dadurch **gekennzeichnet**, daß die Tastvorrichtung und die anderen Behandlungsaggregate mit einem oder mehreren fahrbaren Portalen über das Fahrzeug bewegt werden, wobei der zurückgelegte Weg des Portals gemessen wird.

6. ) Vorrichtung zur Durchführung des Verfahrens nach Anspruch 1 oder einem der folgenden, dadurch **gekennzeichnet**, daß die Autowaschanlage (1) mehrere bewegliche Behandlungsaggregate aufweist, denen mindestens ein Weggeber (3) zugeordnet ist.

7. ) Vorrichtung nach Anspruch 6, dadurch **gekennzeichnet**, daß die Autowaschanlage (1) mindestens eine bewegliche Tastvorrichtung (4) mit jeweils mindestens einem zugeordneten Weggeber (3) und eine Steuerung mit einem beschreib- und lesbaren Datenspeicher aufweist.

8. ) Vorrichtung nach Anspruch 7, dadurch **gekennzeichnet**, daß die Tastvorrichtung (4) aus ein oder mehreren horizontalen und/oder vertikalen momentengesteuerten Waschbürsten besteht, die in einem Portal (2) beweglich geführt sind, wobei die Waschbürsten jeweils einen Weggeber (3) für die Relativbewegung im Portal (2) aufweisen.

9. ) Vorrichtung nach Anspruch 7 oder 8, dadurch **gekennzeichnet**, daß die Tastvorrichtung (4) in einem bewegten Portal (2) angeordnet ist, das mit einem Weggeber (3) für seinen Fahrweg ausgerüstet ist.

10. ) Vorrichtung nach Anspruch 7 oder einem der folgenden, dadurch **gekennzeichnet**, daß der Weggeber (3) einen Maßstab (5) aufweist, der relativ ortsfest angeordnet ist sowie mindestens einen Sensor (8), der am relativ bewegten Teil (2,4) befestigt ist.

11. ) Vorrichtung nach Anspruch 10, dadurch **gekennzeichnet**, daß der Maßstab (5) als Zahnleiste (6) oder Lochleiste (7) und der Sensor (8) als berührungsloser Taster ausgebildet ist.

12. ) Vorrichtung nach Anspruch 11, dadurch **gekennzeichnet**, daß der Maßstab (5) aus Metall besteht und der Sensor (8) als induktiver oder kapazitiver Taster ausgebildet ist.

13. ) Vorrichtung nach Anspruch 11 oder 12, dadurch **gekennzeichnet**, daß die Zahnleiste (6) mit einer Gegenleiste (15) mit komplementärer Verzahnung im Eingriff steht.

14. ) Vorrichtung nach Anspruch 7 oder einem der folgenden, dadurch **gekennzeichnet**, daß zwei Sensoren (8) in Bewegungsrichtung hintereinander angeordnet sind.

15. ) Vorrichtung nach Anspruch 8 oder einem der folgenden, dadurch **gekennzeichnet**, daß der Maßstab (5) am Portal (2) und der Sensor (8) am Laufwerk (9) der horizontalen und/oder vertikalen Waschbürste (4) befestigt ist.

16. ) Vorrichtung nach Anspruch 9 oder einem der folgenden, dadurch **gekennzeichnet**, daß der Maßstab (5) am Fuß der Laufschiene (10) für das Portal (2) und der Sensor (8) am Laufwerk (9) des Portals (2) angeordnet ist.

17. ) Vorrichtung nach Anspruch 16, dadurch **gekennzeichnet**, daß zwei Portale (2,19) aneinander geführt sind, wobei jedes Portal einen Wegge-

ber (3) aufweist.

Fig.1

5,6

1,3

8

9

11

10

Fig.3

10

11

5,6

0

I

II

III

IV

5,6

13

14

Fig.4

12

10

10

15

11

4

6

Fig.2

EP 0 358 931 A2

Fig.5

Fig.6

Fig.7

Fig. 8

EP 0 358 931 A2